# EUROPÄISCHE PATENTSCHRIFT

(11) **EP 1 134 563 B1**
(45) Veröffentlichungstag und Bekanntmachung des Hinweises auf die Patenterteilung: **31.12.2008**
(21) Anmeldenummer: 01100860.4
(22) Anmeldetag: 16.01.2001
(51) Int. Cl.: G01F 23/26, F01M 11/12, G01F 23/24

(54) **Ölfüllstandssensor**
Oil level sensor
Dispositif de mesure du niveau d'huile

(30) Priorität: 10.03.2000 DE 10011860
(43) Veröffentlichungstag der Anmeldung: 19.09.2001
(73) Patentinhaber: MAN NUTZFAHRZEUGE AG, 80995 München (DE)
(72) Erfinder: Sprickmann Kerkerinck, Stefan, Dipl.-Ing., 90403 Nürnberg (DE); Kalass, Rainer, 91189 Rohr (DE)

(56) Entgegenhaltungen:
- EP-A- 0 420 421
- EP-A- 1 013 900
- DE-U1- 9 218 364
- DE-U1- 29 606 311

## Beschreibung

Die Erfindung bezieht sich auf einen Ölfüllstandssensor gemäß dem Gattungsbegriff des Patentanspruches 1.

Zur Messung des Ölstandes in Ölwannen von Brennkraftmaschinen sind kapazitiv arbeitende Sensoren bekannt, welche durch eine Veränderung ihrer Kapazität als Funktion des Ölstandes den in der Ölwanne herrschenden Ölspiegel anzeigen, siehe z.B. das deutsche Gebrauchsmuster DE 9 218 364 U1. Da das zwischen den Elektroden des kapazitiven Sensors befindliche Öl ruht kann es zu Ablagerungen führen, was wiederum das Meßergebnis fälschen kann. Um zu überprüfen, ob eine derartige Verschmutzung vorliegt, nimmt man zunächst eine statische Messung vor und vergleicht diesen Ölstand mit dem Ölstand nach dem Start der Brennkraftmaschine. Zeigt der Ölstand bei laufender Brennkraftmaschine ebenselben Wert ist davon auszugehen, daß der Ringraum zwischen den Elektroden für den Durchfluß blockiert ist. Zur Gängigmachung der Sonde ist eine Reinigung unabdingbar.

DE 296 06 311 U1 offenbart eine Vorrichtung zur Ölstandsüberwachung mit einem in eine Ölwanne ragenden Saugrohr. Das Ansaugende des Saugrohres befindet sich unterhalb des Niveaus des optimalen Ölstandes und oberhalb des Niveaus des minimalen Ölstandes, und ist an einer Stelle der Ölwanne angeordnet, an der Niveauschwankungen des Ölstandes infolge von Lageveränderungen, Beschleunigungen oder Verzögerungen des Fahrzeuges am geringsten sind. Ein thermischer Sensor detektiert, ob Öl, ein Öl-Luft-Gemisch oder lediglich Luft angesaugt wird.

Der Erfindung liegt die Aufgabe zugrunde, jederzeit eine zuverlässige Ölstandsmessung vornehmen zu können, auch dann, wenn das Fahrzeug um Quer- und/ oder Längsachse geneigt ist.

Gelöst wird diese Aufgabe durch die Merkmale des Patentanspruches 1.

Dadurch, daß der Sensor ständig vom Öl durchströmt ist, kann sich in der Meßstrecke des Sensors keine Ablagerung bilden welche den Zu- oder Ablauf des Öl hindert, so daß stets eine zuverlässige Messung des Ölstandes erfolgen kann. Eine Reinigung des Sensors ist folglich überflüssig.

Dadurch, daß das Saugrohr in der Umgebung der neutralen Faser angeordnet ist, und daß es in seinem Verlauf der neutralen Faser folgt, kann eine zuverlässige Ölmessung selbst dann erfolgen, wenn das Fahrzeug nach beliebigen Seiten geneigt ist.

Vorteilhafte Ausbildungen des Sensors können den Unteransprüchen 2 bis 6 entnommen werden.

Die Auswertung der Meßergebnisse erfolgt in Abhängigkeit der Bauart des Sensors gemäß Anspruch 7.

Ausführungsbeispiele des Ölfüllstandssensors sind an Hand von Zeichnungen dargestellt. Es zeigt:
- Fig. 1: einen Schnitt durch einen Sensor im Saugrohr einer Umlaufschmierung
- Fig. 2: einen Schnitt durch das Saugrohr mit Sensor in Form von Einzelwiderständen

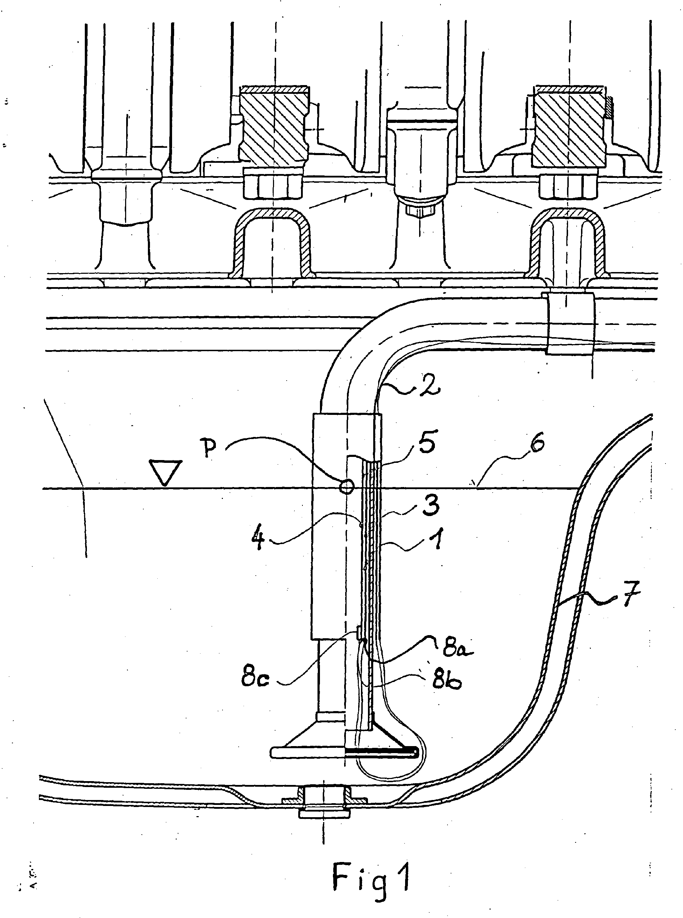

Der Sensor 1 des Ölfüllstandssensor ist in den in Fig. 1 dargestellten Beispiel als kapazitiver Sensor ausgebildet. Erfindungsgemäß ist dieser Sensor 1 in ein Saugrohr 2 der Umlaufschmierung integriert, so daß er ständig vom Öl durchströmt wird und so eine Verschmutzung oder gar ein Verstopfen zuverlässig vermieden wird.

Der Sensor 1 besteht aus einer äußeren Elektrode 3 und einer dazu konzentrisch angeordneten inneren Elektrode 4. Zwischen den zylindrischen Elektroden 3, 4 befindet sich ein Ringraum 5, welcher vom Öl durchströmt wird. Das Saugrohr 2 kann zugleich als äußere Elektrode 3 ausgeführt werden. Wenn äußere Elektrode 3 und innere Elek trode 4 in Kunststoff gefertigt werden ist es erforderlich, die sich einander gegenüberstehenden Oberflächen mit einer leitfähigen Schicht zu versehen, die über Zuleitungen 8a, 8b mit der hier nicht dargestellten Spule eines Schwingkreises verbunden wird.
Das Öl bildet ein Dielektrikum. Im Stillstand der Brennkraftmaschine, wenn kein Öl umgewälzt wird, befindet sich der Ölstand im Ringraum 5 nach dem Prinzip kommunizierender Rohre auf dem gleichen Niveau wie der Spiegel 6 der Ölwanne 7. Die Höhe des Spiegels 6 beeinflußt die Kapazität des Sensors 1. Der Ölstandssensor 1 kann mit einer Spule parallel geschaltet werden, so daß ein Schwingkreis entsteht. Geringe Änderungen des Spiegels 6 führen durch Veränderung der Kapazität des Sensors 1 zu einer Verstimmung des Schwingkreises und zeigen in einer Elektronik an, daß Öl nachzufüllen ist.

Um den Sensor 1 unempfindlich gegen Lageänderungen der Brennkraftmaschine und der damit verbundenen Ölwanne 7 zu machen wird das Saugrohr 2 in der Umgebung einer neutralen Faser angeordnet. Der Punkt P sei der Schnittpunkt des Spiegels 6 mit der neutralen Faser.

Eine weitere Verbesserung kann dadurch erreicht werden, daß das Saugrohr 2 nicht wie im dargestellten Beispiel gerade ist, sondern derart gekrümmt wird, daß es dem Verlauf der neutralen Faser folgt.

Die neutrale Faser ist so definiert, daß sie diejenige Raumkurve innerhalb eines unregelmäßig geformten Hohlkörpers beschreibt, die sich aus den jeweiligen Punkten gleicher Oberflächenhöhe bei konstantem Füllvolumen unabhängig von der Raumneigung ( innerhalb gewisser Grenzen ) ergibt.

Anders ausgedrückt: innerhalb eines unregelmäßig geformten Hohlkörpers läßt sich für jedes diskrete Volumen ( = Füllstand ) genau ein Punkt der Oberfläche bestimmen, der sich auch bei Änderungen der räumlichen Schräglage ( innerhalb gewisser Grenzen ) nicht verändert. Das Integral über die Gesamtmenge dieser Punkte ergibt eine unregelmäßig gekrümmte Raumkurve K = f (Füllfstand, Hohlkörpergeometrie ), die wir der Einfachkeit halber als-"Neutrale Faser" bezeichnen.

Der Sensor 1 kann auch als induktiver Sensor ausgebildet sein. Die Spule ist dann ins Saugrohr 2 eingebaut und das Öl strömt durch die Seele der Spule. Die Induktivität der Spule ist eine Funktion des Spiegels 6. Die Spule wird mit einer Kapazität parallel geschaltet und bildet wiederum einen Schwingkreis.

Anstelle kapazitiver, oder induktiver Sensoren können auch Sensoren verwendet werden, welche nach dem an sich bekannten System des Hitzdrahtes arbeiten, dessen Widerstand sich mit der Temperatur ändert. Diese Temperaturänderung ist eine Funktion des Ölstandes in der Ölwanne.

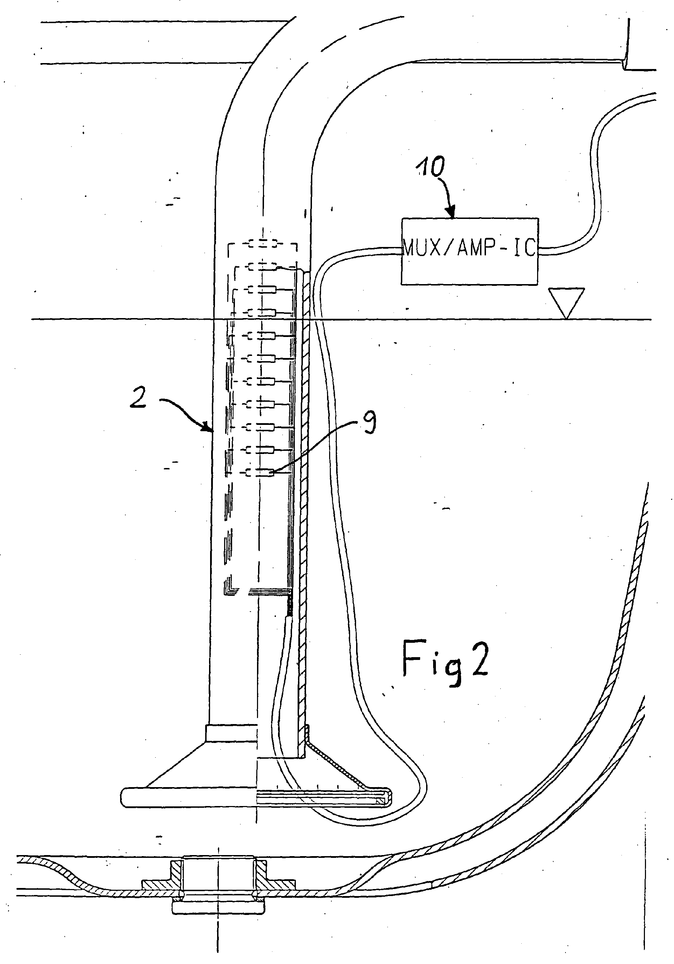

Nach Fig. 2 kann der Ölstand im Saugrohr 2 mit temperaturabhängigen PTC- oder NTC Widerständen 9 gemessen werden. Diese Widerstände 9 werden in Abständen übereinander im Saugrohr 2 angeordnet und einzeln mit einer externen elektronischen Auswerteschaltung 10 verbunden. Erfindungsgemäß ist das Ergebnis der Auswertung zuverlässig, da durch die Anordnung im Saugrohr 2 die gesamte Meßstrecke stets von Motoröl durchströmt und so von Sedimenten freigehalten wird.

Es versteht sich von selbst, daß neben dem Ölstand auch die Ölgüte bestimmt werden kann, da nach dem allgemeinen Erfindungsgedanken diese Sensoren stets rein gehalten werden.

In den Ölstandssensor kann zusätzlich eine Temperaturmeßpille zur Erfassung der Öltemperatur integriert sein.

Die erfindungsgemäße Ölstandssonde ist stets meßbereit, da keine Verschmutzung entstehen kann und da sie von Lageänderungen der Brennkraftmaschine unabhängig ist. Der bauliche Aufwand ist denkbar gering.

## Patentansprüche

1. Ölfüllstandssensor, bestehend aus einem Sensor (1) und einer Elektronik zur Auswertung des durch den Sensor (1) gemessenen Ölstandes, wobei der Sensor (1) in ein Saugrohr (2) der Umlaufschmierung einer Brennkraftmaschine integriert ist, derart, daß das aus einer Ölwanne (7) geförderte Öl ständig die Messtrecke des Sensors (1) durchströmt, **dadurch gekennzeichnet, daß** das Saugrohr (2) mit dem integrierten Sensor (1) im Bereich der neutralen Faser in der Ölwanne (7) angeordnet ist und mit seiner Form selbst zumindest annähernd der neutralen Faser folgt.

2. Ölfüllstandssensor nach Anspruch 1, **dadurch gekennzeichnet, daß** der Sensor (1) als kapazitiver Sensor ausgebildet ist, welcher aus zwei zueinander konzentrischen äußeren und inneren Elektroden (3, 4) besteht und daß das Öl der Umlaufschmierung einen Ringraum (5) zwischen den Elektroden (3, 4) durchflutet.

3. Ölfüllstandssensor nach Anspruch 2, **dadurch gekennzeichnet, daß** das Saugrohr (2) die äußere Elektrode (3) des Sensors (1) bildet, wobei das Saugrohr in Kunststoff gefertigt ist, daß die innere Elektrode (4) ebenfalls in Kunststoff gefertigt ist, daß die sich gegenüberstehenden Oberflächen der Elektroden (3 und 4 ) mit einem leitfähigen Beland beschichtet sind und daß die Elektroden (3, 4) über Zuleitungen (8a, 8b) mit einem Schwingkreis der Elektronik verbunden sind.

4. Ölfüllstandssensor nach Anspruch 1, **dadurch gekennzeichnet, daß** der Sensor (1) als induktiver Sensor ausgebildet ist, daß die Induktivität als Spule ausge-bildet ist, welche im Saugrohr (2) angeordnet ist und daß die Seele der Spule vom Motoröl durchströmt wird.

5. Ölfüllstandssensor nach Anspruch 1, **dadurch gekennzeichnet, daß** der Sensor (1) thermisch nach dem Prinzip des Hitzdrahtes arbeitet.

6. Ölfüllstandssensor nach Anspruch 1, **dadurch gekennzeichnet, daß** als Sensor (1) PTC- oder NTC Widerstände verwendet werden und daß diese Widerstände im Saugrohr (2) geometrisch gesehen übereinander angeordnet werden.

7. Ölfüllstandssensor nach den Ansprüchen 1 bis 4, **dadurch gekennzeichnet, daß** die Auswertung der Messergebnisse des Sensors (1) mittels eines abgestimmten Schwingkreises erfolgt.

## Claims

1. An oil-level sensor consisting of a sensor (1) and an electronic unit for evaluation of the oil level measured by the sensor (1), wherein the sensor (1) is integrated into a suction tube (2) of the circulatory lubrication system of an internal-combustion engine in such a way that the oil supplied from an oil sump (7) constantly flows through the measuring section of the sensor (1), **characterised in that** the suction tube (2) with the integrated sensor (1) is arranged in the oil sump (7) in the region of the neutral axis and its shape at least approximately follows the neutral axis.

2. An oil-level sensor according to claim 1, **characterised in that** the sensor (1) is formed as a capacitive sensor consisting of two concentric outer and inner electrodes (3, 4) and **in that** the oil of the circulatory lubrication system flows through an annulus (5) between the electrodes (3, 4).

3. An oil-level sensor according to claim 2, **characterised in that** the suction tube (2) forms the outer electrode (3) of the sensor (1), wherein the suction tube is made of plastic, **in that** the inner electrode (4) is likewise made of plastic, **in that** the opposing surfaces of the electrodes (3, 4) are coated with a conductive layer and **in that** the electrodes (3, 4) are connected by leads (8a, 8b) to an oscillatory circuit of the electronic unit.

4. An oil-level sensor according to claim 1, **characterised in that** the sensor (1) is formed as an inductive sensor, **in that** the inductor is formed as a coil which is arranged in the suction tube (2) and **in that** the engine oil flows through the core of the coil.

5. An oil-level sensor according to claim 1, **characterised in that** the sensor (1) operates thermally according to the hot-wire principle.

6. An oil-level sensor according to claim 1, **characterised in that** PTC or NTC resistors are used as a sensor (1) and **in that** these resistors are arranged one above another in the suction tube (2) when seen geometrically.

7. An oil-level sensor according to claims 1 to 4, **characterised in that** the measuring results of the sensor (1) are evaluated by means of a tuned oscillatory circuit.

## Revendications

1. Dispositif de détection du niveau d'huile, composé d'un capteur (1) et d'un circuit électronique d'exploitation de la mesure du niveau d'huile par le capteur (1),
le capteur (1) étant intégré dans le tuyau d'aspiration (2) du circuit de graissage d'un moteur à combustion interne de façon que l'huile reprise d'une bâche à huile (7) passe en permanence par le chemin de mesure du capteur (1),
**caractérisé en ce que**
le tuyau d'aspiration (2) avec le capteur intégré (1) est installé dans la zone de la fibre neutre dans la bâche à huile (7) et sa forme suit elle-même au moins sensiblement la fibre neutre.

2. Dispositif selon la revendication 1,
**caractérisé en ce que**
le capteur (1) est un capteur capacitif composé de deux électrodes concentriques (3, 4), une électrode extérieure et une électrode intérieure et
l'huile du circuit d'huile traverse le volume annulaire (5) entre les électrodes (3, 4).

3. Dispositif selon la revendication 2,
**caractérisé en ce que**
le tuyau d'aspiration (2) constitue l'électrode extérieure (3) du capteur (1), le tuyau d'aspiration étant en matière plastique,
l'électrode intérieure (4) est également fabriquée en matière plastique et les surfaces en regard des électrodes (3, 4) sont revêtues d'un revêtement conducteur et
les électrodes (3, 4) sont reliées par des lignes d'alimentation (8a, 8b) à un circuit oscillant du circuit électronique.

4. Dispositif selon la revendication 1,
**caractérisé en ce que**
le capteur (1) est un capteur inductif,
l'inductance étant réalisée sous la forme d'une bobine installée dans le tuyau d'aspiration (2) et l'âme de la bobine est traversée par l'huile du moteur.

5. Dispositif selon la revendication 1,
**caractérisé en ce que**
le capteur (1) est un capteur thermique fonctionnant selon le principe du fil chaud.

6. Dispositif selon la revendication 1,
**caractérisé en ce que**
le capteur (1) utilise des résistances PTC ou NTC et
les résistances sont installées géométriquement l'une au-dessus de l'autre dans le tuyau d'aspiration (2).

7. Dispositif selon les revendications 1 à 4,
**caractérisé en ce que**
l'exploitation des résultats de la mesure du capteur (1) se fait à l'aide d'un circuit oscillant accordé.
